# EUROPEAN PATENT APPLICATION

(11) **EP 1 190 875 A2**
(43) Date of publication of application: **27.03.2002**
(21) Application number: 01307470.3
(22) Date of filing: 03.09.2001
(51) Int. Cl.: B60G 7/00

(54) **Suspension system for a vehicle**

(30) Priority: 25.09.2000 US 669422
(71) Applicant: BRIGGS & STRATTON CORPORATION, Wauwatosa, Wisconsin 53222 (US)
(72) Inventor: Carlson, Robert B, Brookfield, Wisconsin 53045 (US)
(74) Representative: Carpenter, David

(57) **Abstract**

A vehicle suspension system including a vehicle body and a hub assembly spaced from the vehicle body and having an inner hub member. The suspension system further includes a first control arm having an outboard end pivotally connected to the inner hub member at a first pivot point having a first pivot axis, and an inboard end pivotally connected to the vehicle body. Additionally, the suspension system has a strut including a shock absorbing member and a spring mounted substantially coaxially with the shock absorbing member. The strut has an outboard end pivotally connected to the inner hub member at the first pivot point such that the first control arm and the strut both pivot about the first pivot axis. The strut also has an inboard end pivotally connected to the vehicle body. In a preferred aspect, the suspension system includes a shim positioned between the inboard end of the first control arm and the vehicle body to achieve a desired offset between the hub assembly and the vehicle body.

## Description

### FIELD OF THE INVENTION

The invention relates to powered vehicles, and more particularly to suspension systems for powered vehicles.

### BACKGROUND OF THE INVENTION

Suspension systems are commonly used on modem powered vehicles to isolate the wheels of the vehicle from the frame or body of the vehicle and thus from the passenger compartment. External forces acting on the wheels, due to irregularities in the driving surface or vehicle maneuvering, are absorbed by the suspension system to reduce or substantially eliminate the transmission of these forces into the frame. The suspension systems are designed to provide the desired ride and handling characteristics by varying the spring forces and the amount of absorption that occurs.

There are many different types of suspension systems, each having different absorption characteristics, advantages, and disadvantages. Several factors influence the type of suspension system that can be used in a particular vehicle.

One important factor is the size and shape of the envelope in which the suspension system must be located. Another important factor is the size of the vehicle and the type of usage and loading that the vehicle will experience. The speed at which the vehicle will operate is yet another important factor in selecting and designing an appropriate suspension system. Additionally, the cost of the vehicle also plays a role in determining what type of suspension system is used.

### SUMMARY OF THE INVENTION

The present invention provides an improved vehicle suspension system for use with small, lightweight-utility, low-speed, turf, and three-wheeled vehicles. Such vehicles include small compact cars, small off-road utility trucks, neighborhood vehicles typically used in retirement communities, golf carts, and the like. The suspension system of the present invention is extremely versatile, and thereby capable of handling the broad range of operating conditions normally encountered by each of the above-mentioned vehicles. Additionally, the overall cost of the vehicle is kept low because the suspension system is relatively inexpensive to manufacture and assemble.

More specifically, the invention provides a vehicle suspension system including a vehicle body and a hub assembly spaced from the vehicle body and having an inner hub member. The suspension system further includes a first control arm having an outboard end pivotally connected to the inner hub member at a first pivot point having a first pivot axis, and an inboard end pivotally connected to the vehicle body. Additionally, the suspension system has a strut including a shock absorbing member and a spring mounted substantially coaxially with the shock absorbing member. The strut has an outboard end pivotally connected to the inner hub member at the first pivot point such that the first control arm and the strut both pivot about the first pivot axis. The strut also has an inboard end pivotally connected to the vehicle body.

In one aspect of the invention, the suspension system includes a second control arm having an outboard end pivotally connected to the inner hub member at a second pivot point having a second pivot axis, and an inboard end pivotally connected to the vehicle body. Preferably, the second control arm is an adjustable rod.

In another aspect of the invention, a shim is positioned between the inboard end of the control arm and the vehicle body to achieve a desired offset between the hub assembly and the vehicle body.

Furthermore, the invention provides a method of adjusting the alignment of a wheel of a vehicle with respect to a vehicle body. The wheel is connected to the vehicle body by a control arm having an inboard end interconnected with the vehicle body. The method includes determining a first wheel orientation with respect to the vehicle body, analyzing the first wheel orientation to determine whether the wheel is properly oriented with respect to the vehicle body, and changing a spacing between the inboard end of the control arm and the vehicle body using a shim when the wheel is not properly oriented with respect to the vehicle body, such that the first wheel orientation is adjusted to a second wheel orientation with respect to the vehicle body. Changing the spacing using the shim preferably includes inserting a shim and/or removing a shim, or changing the configuration of the shim between the inboard end and the vehicle body.

Other features and advantages of the invention will become apparent to those skilled in the art upon review of the following detailed description, claims, and drawings.

### BRIEF DESCRIPTION OF THE DRAWINGS

Fig. 1 is a rear view of a suspension system embodying the invention.
Fig. 2 is a perspective view showing a portion of the passenger or right side of the suspension system of Fig. 1, with parts removed for ease of illustration.
Fig. 3 is another perspective view of the passenger side of the suspension system of Fig. 1.
Fig. 4 is an exploded view showing a portion of the mounting assembly of the suspension system of Fig. 1.
Fig. 5 is a top view, partially cut away, illustrating an alignment adjustment to the passenger side of the suspension system of Fig. 1, with parts removed for ease of illustration.
Fig. 6 is a rear view of the driver or left side of the suspension system having a similar alignment adjustment to that shown in Fig. 5, with parts removed for ease of illustration.
Fig. 7 is a top view, partially cut away, illustrating another alignment adjustment to the passenger side of the suspension system of Fig. 1, with parts removed for ease of illustration.
Fig. 8 is a top view, partially cut away, illustrating yet another alignment adjustment to the passenger side of the suspension system of Fig. 1, with parts removed for ease of illustration.
Fig. 9 is a plan view, partially cut away, showing the drive shaft used with the suspension system embodying the invention.
Fig. 10 is an enlarged section view showing a portion of the drive shaft of Fig. 9 in a retracted position.
Fig. 11 is an enlarged section view showing a portion of the drive shaft of Fig. 9 in an extended position.

Before one embodiment of the invention is explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein is for the purpose of description and should not be regarded as limiting. The use of "including" and "comprising" and variations thereof herein is meant to encompass the items listed thereafter and equivalents thereof as well as additional items.

### DETAILED DESCRIPTION OF THE PREFERRED EMBODIMENT

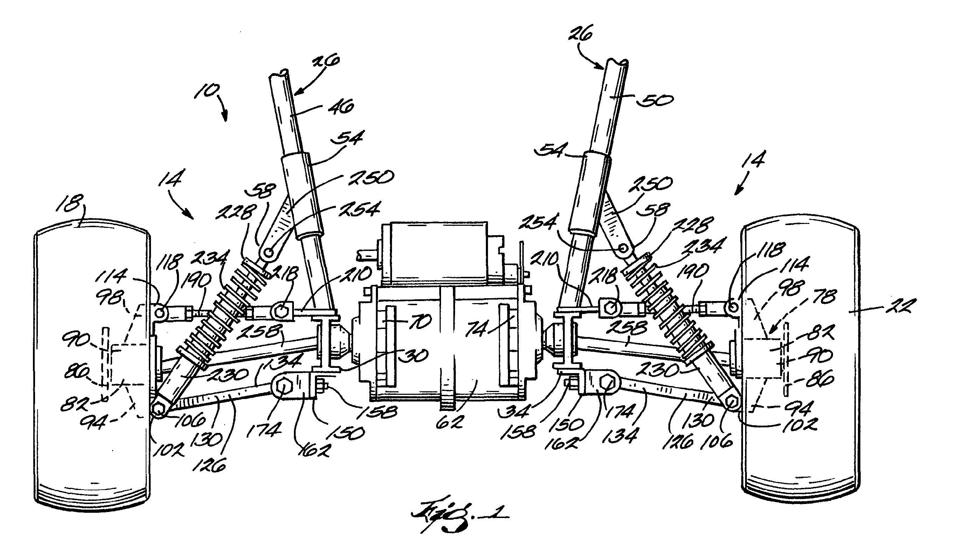

Figure 1 illustrates a suspension system 10 embodying the invention. The suspension system 10 is preferably for use with small, lightweight-utility, low-speed, turf, and three-wheeled vehicles (not shown). Such vehicles can include small compact cars, small off-road utility trucks, neighborhood vehicles typically used in retirement communities, golf carts, and the like. The suspension system 10 can be used in conjunction with driven or non-driven wheels and is preferably used in conjunction with the non-steering wheels. The suspension system 10 incorporates two substantially identical independent suspension assemblies 14, one for a driver or left-side wheel 18, and one for a passenger or right-side wheel 22. As used herein and in the appended claims, the term "wheel" is meant to include both a tire supporting member or rim on its own, and the combination of a tire supporting member with a mounted tire.

As shown in Fig. 1, the vehicle includes a frame or body portion generally indicated as 26. It should be noted that the terms "frame" and "body portion" are used interchangeably in recognition that many smaller, inexpensive vehicles do not include a frame structure that is distinct from the body of the vehicle. As used herein and in the appended claims, the term "body portion" includes any portion of the vehicle capable of supporting a portion of the suspension system 10 and the respective loads and forces associated therewith.

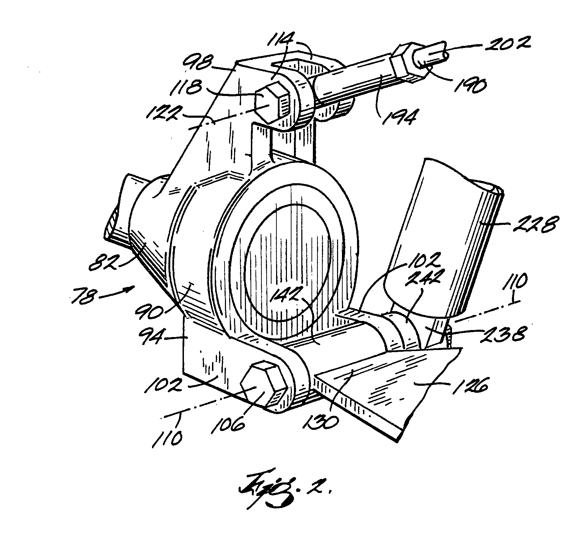

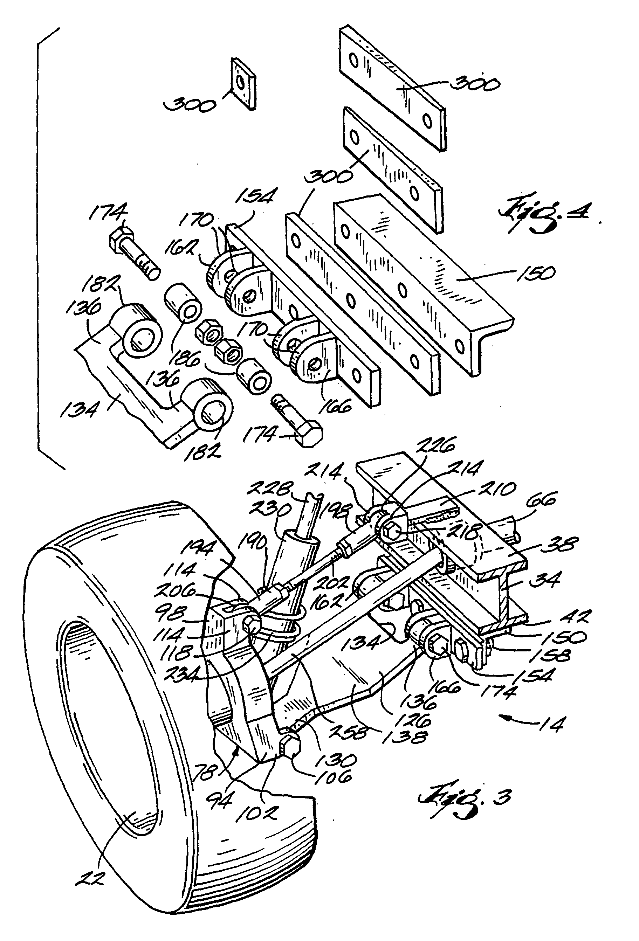

As best seen in Figs. 1 and 3, the body portion 26 includes left and right substantially horizontal support members 30 and 34, respectively. The support members 30 and 34 are preferably I-beams made of aluminum, steel, iron or any other suitable material. The support members 30 and 34 include (see Fig. 3) respective top surfaces 38 and bottom surfaces 42. The body portion 26 further includes (see Fig. 1) left and right angled support members 46 and 50. The angled support members 46 and 50 are preferably tubular and are made from aluminum, steel, iron or any other suitable material. The angled support members 46 and 50 are mounted to the top surfaces 38 of the respective horizontal support members 30 and 34 in any suitable manner, such as by welding or any other mechanical fastening methods. Each angled support member 46 and 50 includes a mounting bracket 54 integral with, or fixed thereto. Each mounting bracket 54 includes a connection end 58, the purpose of which will be described below. It should be understood that the specific configuration of the frame or body portion 26 is not critical to the invention, but rather may vary considerably from vehicle to vehicle.

A power source 62 (see Fig. 1) is supported between the support members 30 and 34 and is capable of driving the wheels 18 and 22. The power source 62 can be a gasoline engine, a battery-powered electric motor, or any other suitable power source. In the preferred embodiment, the power source 62 has an integral continuously variable transmission or CVT and transaxle (i.e., a gear box and differential). It should be noted that the power source 62 can be located elsewhere on the vehicle, including at the front of the vehicle. As seen in Fig. 3, a transaxle output shaft 66 extends from the power source 62 in opposite directions toward both the wheels 18 and 22. Left and right brake assemblies 70 and 74 (see Fig. 1) surround the transaxle output shaft 66 on opposite sides of the power source 62. The brake assemblies 70 and 74 are preferably mounted in the inboard location illustrated in Fig. 1. As used herein and in the appended claims to describe locations and/or directions, the terms "inner" and "inboard" refer generally to the central portion of vehicle and a direction extending from either of the wheels 18 and 22 towards the power source 62, while "outer" and "outboard" refer generally to the opposing outside portions of the vehicle and a direction extending from the power source 62 towards either of the wheels 18 and 22.

By mounting the brake assemblies 70 and 74 adjacent the power source 62, the brake assemblies 70 and 74 are part of the vehicle's sprung mass, meaning that they are supported by the suspension system 10. This arrangement is preferable to mounting the brake assemblies 70 and 74 adjacent the wheels 18 and 22, wherein the brake assemblies 70 and 74 would be part of the vehicle's unsprung mass. To reduce the transmission of vibration forces to the body portion 26, it is desirable to minimize the un-sprung mass of a vehicle. The invention could be practiced, however, with the brake assemblies 70 and 74 mounted adjacent the wheels 18 and 22 as discussed below. In the illustrated embodiment, the brake assemblies 70 and 74 are conventional disk brake assemblies with cast iron disks and hydraulically or mechanically actuated calipers.

The independent suspension assemblies 14 of the suspension system 10 are substantially mirror images of one another and only one independent suspension assembly 14 will be described in detail. Like reference numerals indicate like parts. Referring to Figs. 1-3, the right-side or passenger-side independent suspension assembly 14 is mounted between the wheel 22 and the support members 34 and 50. The wheel 22 is mounted on a wheel support member or hub assembly 78 having an inner hub member 82 and an outer hub member 86 (see Fig. 1). The outer hub member 86 is rotatably supported by the inner hub member 82 and is connected to the wheel 22. The inner hub member 82 includes a hollow central portion 90, a lower support flange 94, and an upper support flange 98. The inner hub member 82 is preferably a cast or forged metallic part.

The lower support flange 94 includes spaced-apart sidewalls 102 having aligned apertures extending therethrough for receiving a pivot pin 106. As will be described in more detail below, the pivot pin 106 defines a lower pivot point having a pivot axis 110 (see Figs. 2, 5, and 7-8). The upper support flange 98 also includes spaced-apart sidewalls 114 having aligned apertures extending therethrough for receiving a pivot pin 118. The pivot pin 118 defines an upper pivot point having a pivot axis 122 (see Fig. 2).

A first or lower control arm 126 is pivotally connected between the hub assembly 78 and the support member 34. The lower control arm 126 includes an outboard end 130, an inboard end 134 having spaced-apart arms 136, and a generally wishbone-shaped body portion 138 extending between the outboard end 130 and the inboard end 134. The lower control arm 126 is preferably an aluminum casting, but can also be cast or fabricated from other materials, such as steel or iron. As will be explained in greater detail below, the lower control arm 126 is a relatively simple part and need not be a complex and/or reinforced stamped or forged part like those typical of the prior art.

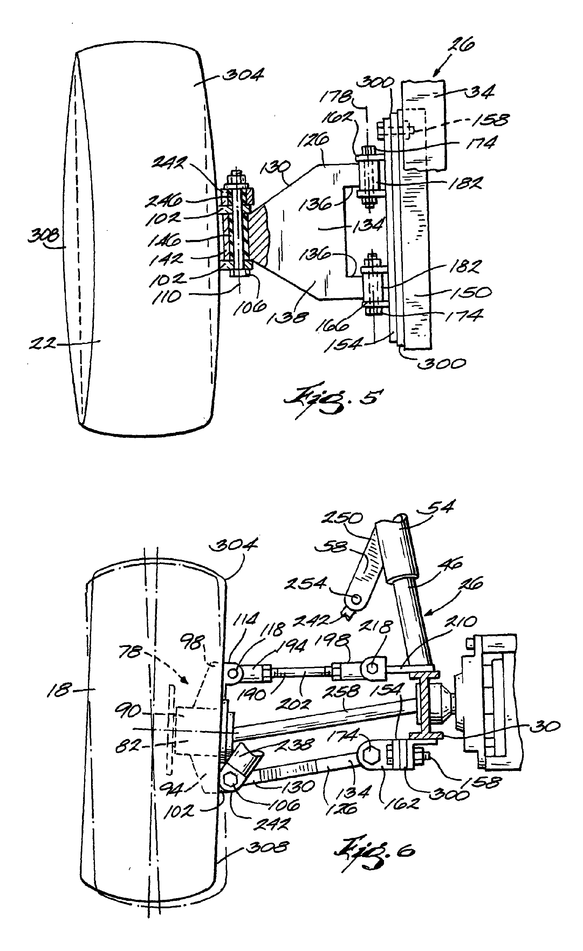

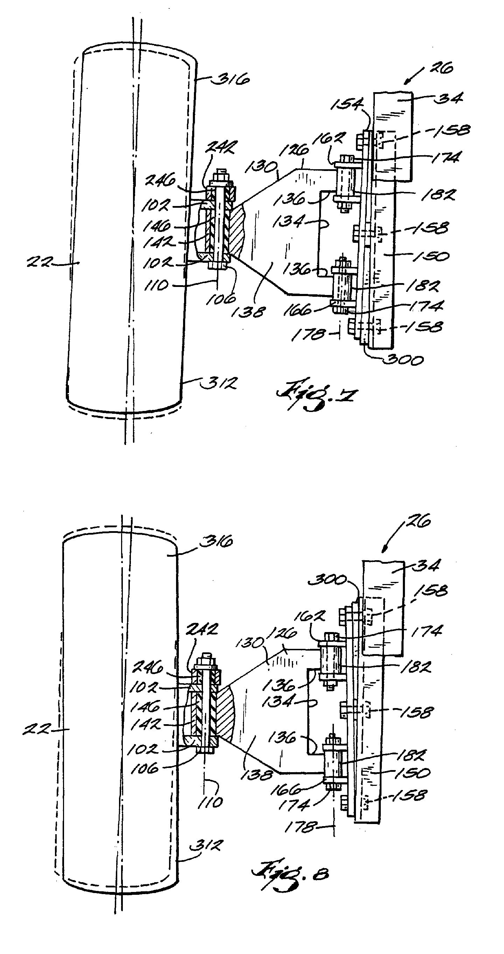

The outboard end 130 of the lower control arm 126 is pivotally connected to the lower flange 94 of the inner hub member 82 via the pivot pin 106. The outboard end 130 includes (see Figs. 2, 5, and 7-8) a generally cylindrical mounting tube 142 that fits between spaced-apart sidewalls 102 to receive the pivot pin 106. An elastomeric bushing 146 (see Figs. 5 and 7-8) is positioned between the pivot pin 106 and the cylindrical mounting tube 142 to isolate the pivot pin 106 from the lower control arm 126. The bushing 146 eliminates the need for lubricating an otherwise metal-on-metal connection and helps prevent high-frequency vibration from being transmitted into the lower control arm 126. The bushing 146, like the other bushings yet to be described, is preferred, but is not required.

The inboard end 134 of the lower control arm 126 is pivotally connected to the support member 34. As best seen in Figs. 1 and 3-4, an L-shaped mounting bracket 150 is preferably welded or otherwise attached to the bottom surface 42 of the support member 34. A connection plate 154 is fastened to the L-shaped mounting bracket 150 with fasteners 158. The connection plate 154 preferably includes two spaced-apart supports 162 and 166, respectively. Each of the spaced-apart supports 162 and 166 includes a pair of spaced-apart sidewalls 170 (see Fig. 4) with aligned apertures extending therethrough for receiving a pivot pin 174. Together, the pivot pins 174 define two pivot points that share a common pivot axis 178 (see Figs. 5 and 7-8).

Each of the spaced-apart arms 136 of the inboard end 134 includes a generally cylindrical mounting tube 182 that fits between the respective spaced-apart sidewalls 170 to receive the respective pivot pin 174. Elastomeric bushings 186 (see Fig. 4) are positioned between the pivot pins 174 and the cylindrical mounting tubes 182 to isolate the pivot pins 174 from the lower control arm 126.

A second or upper control arm 190 (see Figs. 1-3 and 6) is also pivotally connected between the hub assembly 78 and the support member 34. The upper control arm 190 includes an outboard end 194, an inboard end 198, and a rod 202 extending between the outboard end 194 and the inboard end 198. The upper control arm 190 preferably includes an adjustment mechanism capable of adjusting the overall length of the upper control arm 190. This adjustability provides for a wider range of camber alignment adjustments, as will be further described below. In the illustrated embodiment, the rod 202 includes external threads while the outboard and inboard ends 194 and 198 include threaded bores that receive the opposite ends of the threaded rod 202. By turning the rod 202 relative to the outboard and inboard ends 194 and 198, the overall length of the upper control arm 190 can be adjusted. This type of upper control arm 190 is known in the industry and will not be described in greater detail.

The outboard end 194 of the upper control arm 190 is pivotally connected to the upper flange 98 of the inner hub member 82 via the pivot pin 118. The outboard end 194 includes a generally cylindrical mounting tube 206 (see Fig. 3) that fits between spaced-apart sidewalls 114 to receive the pivot pin 118. An elastomeric bushing (not shown) similar to bushing 146 is positioned between the pivot pin 118 and the cylindrical mounting tube 206 to isolate the pivot pin 118 from the upper control arm 190.

The inboard end 198 of the upper control arm 190 is pivotally connected to the support member 34. As seen in Figs. 1, 3 and 6, a connecting bracket 210 is preferably welded or otherwise attached to the top surface 38 of the support member 34. The connecting bracket 210 includes a pair of spaced-apart sidewalls 214 (see Fig. 3) with aligned apertures extending therethrough for receiving a pivot pin 218.

The inboard end 134 of the upper control arm 190 includes a generally cylindrical mounting tube 226 (see Fig. 3) that fits between the spaced-apart sidewalls 214 to receive the pivot pin 218. An elastomeric bushing (not shown), similar to the bushings 186, is positioned between the pivot pin 218 and the cylindrical mounting tube 226 to isolate the pivot pin 218 from the upper control arm 190.

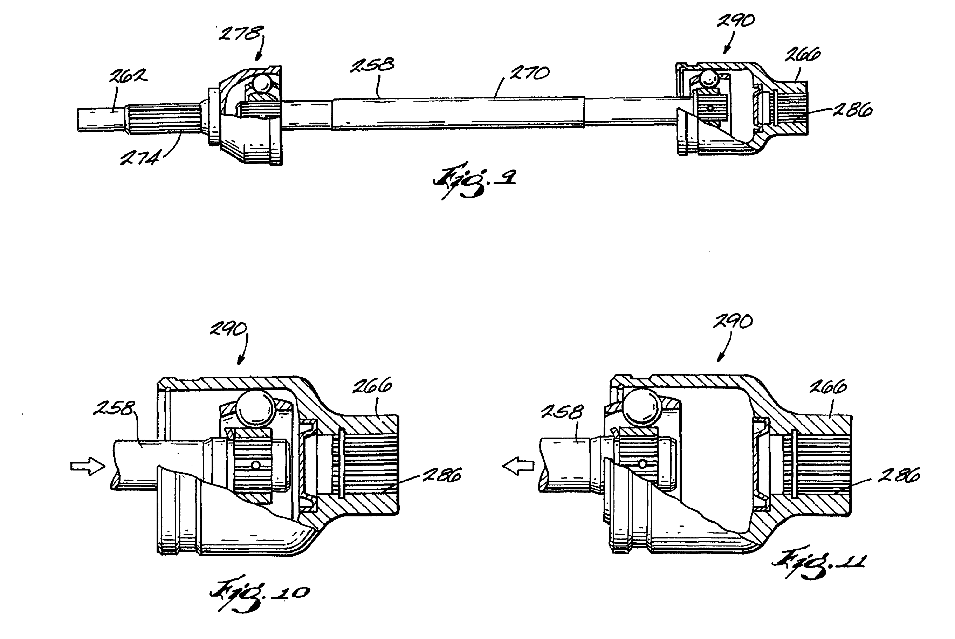

The independent suspension assembly 14 further includes a strut 228 pivotally connected between the hub assembly 78 and the angled support member 50. The strut 228 includes a shock absorbing member 230 and a spring 234 mounted substantially coaxially with the shock absorbing member 230 as is well-known. The strut 228 has (see Fig. 6) an outboard end 238 and an inboard end 242.

As best seen in Figs. 2 and 5-8, the outboard end 238 of the strut 228 is pivotally connected to the lower flange 94 of the inner hub member 82 via the pivot pin 106. The outboard end 238 includes (see Figs. 5 and 7-8) a generally cylindrical mounting tube 242 that is positioned rearwardly of the spaced-apart sidewalls 102 to receive the pivot pin 106. When mounted on the pivot pin 106, the generally cylindrical mounting tube 242 is adjacent the rearward-most sidewall 102. An elastomeric bushing 246 is positioned between the pivot pin 106 and the cylindrical mounting tube 242 to isolate the pivot pin 106 from the strut 228. The bushing 246 can also isolate the strut 228 from the rearward-most sidewall 102.

While the outboard end 238 of the strut 228 is shown positioned rearwardly of the outboard end 130 of the lower control arm 126, it is also possible to reverse the orientation of the outboard ends 130 and 238 such that the outboard end 130 is positioned rearwardly of the outboard end 238. The important aspect is that the outboard end 130 of the lower control arm 126 and the outboard end 238 of the strut 228 are both pivotally connected to the hub assembly 78 at the same pivot point (i.e., by pivot pin 106), and both pivot about the pivot axis 110. The importance of this common pivot point arrangement will be discussed in greater detail below.

The inboard end 242 of the strut 228 is pivotally connected to the angled support member 50 at the connection end 58 of the mounting bracket 54. The connection end 58 includes a pair of spaced-apart sidewalls 250 (only one is shown in Figs. 1 and 6) with aligned apertures extending therethrough for receiving a pivot pin 254. The inboard end 242 of the strut 228 includes a generally cylindrical mounting tube (not shown) that fits between the spaced-apart sidewalls 250 to receive the pivot pin 254. An elastomeric bushing (not shown) similar to the bushing 186 is positioned between the pivot pin 254 and the cylindrical mounting tube of the inboard end 242 to isolate the pivot pin 254 from the strut 228.

As seen in Figs. 1, 3, 6, and 9-11, the vehicle also includes a drive shaft 258 connected between the transaxle output shaft 66 and the outer hub member 86. The drive shaft 258 transfers rotational power from the transaxle output shaft 66 to the wheel 22 as is commonly understood. Recall, however, that the suspension system 10 can be used for non-driven wheels as well as for driven wheels. When used in conjunction with non-driven wheels, the drive shaft 258 is eliminated.

The drive shaft 258 is an adjustable, articulating drive shaft available from GKN Drivetech, Inc. in Walled Lake, Michigan. As best seen in Figs. 9-11, the drive shaft 258 includes an outboard end 262, an inboard end 266, and a central shaft portion 270 extending between the outboard and inboard ends 262 and 266. The outboard end 262 includes a splined portion 274 that is connected to the outer hub portion 86 to cause the rotation of the outer hub portion 86, thereby rotating the wheel 22. Adjacent the splined portion 274 is a ball-and-socket-type articulation joint 278 capable of articulating to accommodate a range of wheel positions corresponding to the jouncing and rebounding of the wheel. The articulation joint 278 is protected from contamination by a resilient boot (not shown).

The inboard end 266 includes a splined transaxle receiving bore 286 that receives a splined end of the transaxle output shaft 66, thereby transmitting the rotation of the transaxle output shaft 66 into the driveshaft 258. The receiving bore 286 is retained axially to the transaxle output shaft 66 with an internal ring and groove arrangement. Adjacent the transaxle receiving bore 286 is a traveling articulation joint 290. The traveling articulation joint 290 is capable of both articulating in a manner similar to the articulation joint 278, and moving between an axially retracted position (see Fig. 10) and an axially extended position (see Fig. 11). The range of extension accommodates the changing distances between the wheel 22 and the end of the transaxle output shaft 66 during the jouncing and rebounding of the wheel 22. The traveling articulation joint 290 is also protected from contamination by a resilient boot (not shown).

The suspension system 10 also includes an inexpensive method for adjusting the orientation or alignment of the wheels 18 and 22. Fig. 4 illustrates a plurality of different shims or shim pieces 300 that can be selectively installed between the inboard end 130 of lower control arm 126 and the support member 34 to achieve a desired offset between the hub assembly 78 and the support member 34. The shim pieces 300 can be made of any suitable material, such as steel, stainless steel, aluminum, brass, or any other corrosion-resistant material.

More specifically, the shim pieces 300 are preferably individually and/or cumulatively installed between the L-shaped mounting bracket 150 and the connection plate 154 to achieve the desired offset between the hub assembly 78 and the support members 30 and 34, thereby providing an inexpensive way of adjusting the wheel alignment. The desired offset can be achieved using any single or multiple shim arrangement. For example, a single shim piece 300 can be used to achieve the desired offset, or alternatively, two or more shim pieces 300 can be positioned between the L-shaped mounting bracket 150 and the connection plate 154 in stacked relation and/or in side-by-side relation.

As illustrated in Figs. 4-8, the shim pieces 300 can have various lengths, and thicknesses. The length of the shim pieces 300 can be substantially the same as the length of the connection plate 154, in which case the shim pieces 300 will preferably include the same number of holes or apertures as the connection plate 154, for receiving the fasteners 158. Alternatively, the shim pieces 300 can have substantially shorter lengths than the connection plate 154, in which case the shim pieces 300 may include fewer holes than the connection plate 154, and only receive a fraction of the fasteners 158. The thicknesses of the shim pieces 300 can be uniform, to yield a generally rectangularly-shaped shim, variable, to yield a generally wedge-shaped shim, or any combination of uniform and variable. Preferably, the thickness of the individual shim pieces 300 will range from approximately 0.5 mm to 3 mm.

Depending upon the configuration of shim pieces 300 used, the wheels 18 and 22 can undergo various alignment or orientation adjustments. As used herein and in the appended claims, the terms "alignment" and "orientation" are meant to broadly describe the positioning of the wheel with respect to the body portion 26. Figs. 5 and 6 illustrate a first alignment adjustment that can be made using the shims 300. This first alignment adjustment is known to those skilled in the art as adjusting the camber of the wheel. In other words, the wheels 18 and 22 have an upper end 304 spaced a distance from the vehicle body 26 and a lower end 308 spaced a distance from the vehicle body 26. By changing the distances between the upper and lower ends 304 and 308 and the body portion 26, the orientation of the wheel's vertical axis with respect to the vehicle body 26 (as shown in Fig. 5) can be changed.

As seen in Figs. 5 and 6, a shim 300 is positioned between the L-shaped mounting bracket 150 and the connection plate 154. The shim 300 increases the offset between the lower flange 94 of the hub assembly 78. The camber of the wheels 18 and 22 are adjusted from a first wheel orientation (shown in phantom in Figs. 5 and 6), wherein no shim 300 is used, to a second or adjusted wheel orientation, wherein the presence of the shim 300 causes the distance between the upper end 304 of the wheels 18 and 22 and the respective support members 30 and 34 to decrease, and causes the distance between the lower end 308 of the wheels 18 and 22 and the respective support members 30 and 34 to increase. By adding or removing shim pieces 300, or by using shim pieces 300 of different thicknesses, the camber of the wheels 18 and 22 can be adjusted to a wide range of desired wheel orientations. The adjustable upper control arm 190 also helps enable a wide range of camber adjustments to take place.

Figs. 7 and 8 illustrate a second type of alignment adjustment that can be made using the shims 300. This second alignment adjustment is known to those skilled in the art as adjusting the toe position or toe-in/out orientation of the wheel. In other words, the wheel 22 has a toe or forward end 312 spaced a distance from the vehicle body 26 and a heel or rearward end 316 spaced a distance from the vehicle body 26. By changing the distances between the forward and rearward ends 312 and 316 and the body portion 26, the orientation of the wheel's horizontal axis with respect to the vehicle body 26 (as shown in Figs. 7 and 8) can be changed.

As seen in Fig. 7, a shim 300 is positioned between the L-shaped mounting bracket 150 and the connection plate 154. The shim 300 in Fig. 7 is shown as being substantially wedge-shaped with the thicker portion adjacent the support 166 and the thinner portion adjacent the support 162. It should be noted, however, that a similar outcome could be achieved using a plurality of shorter length shims having different thicknesses placed in side-by-side relation, a plurality of selectively stacked shorter length shims, or a single shorter length shim mounted between the support 166 and the L-shaped mounting bracket 150 with no shim mounted between the support 162 and the L-shaped mounting bracket 150. The shim 300 changes the orientation of the pivot axis 178 and thus changes the offset between the hub assembly 78 and the body portion 26 to adjust the wheel alignment. The toe 312 of the wheel 22 is adjusted from a first wheel orientation (shown in phantom in Fig. 7), wherein no shim 300 is used, to a second or toe-out adjusted wheel orientation, wherein the presence of the shim 300 causes the distance between the toe 312 and the support member 34 to increase.

Fig. 8 illustrates the use of a shim 300 to adjust the wheel 22 from a first wheel orientation (shown in phantom in Fig. 8), wherein no shim 300 is used, to a second or toe-in adjusted wheel orientation, wherein the presence of the shim 300 causes the distance between the toe 312 and the support member 34 to decrease. The shim 300 in Fig. 8 is also wedge-shaped, however, the thicker portion of the shim 300 is adjacent the support 162 while the thinner portion of the shim 300 is adjacent the support 166. By changing the configuration of the shim pieces 300, the toe-in/out orientation of the wheels 18 and 22 can be adjusted to a wide range of desired toe-in/out wheel orientations. It should be noted that when the toe-in/out orientation of the wheels 18 and 22 is adjusted using any combination of shim pieces 300, the wheel camber orientation can also change somewhat, but such a change to the camber orientation can be minimized by changing the configuration of the shim pieces 300 and/or adjusting the length of the upper control arm 190 as appropriate.

To adjust the alignment of a wheel, the wheel's first or pre-adjustment orientation with respect to the vehicle body 26 must be determined. This can be done using any known mechanical or optical wheel alignment devices (not shown) or any other method including basic drive testing or visual inspection techniques. Once the first wheel orientation is known, an analysis can be performed to determine whether the first wheel orientation is proper, or whether the wheel is improperly oriented and an alignment adjustment is needed. This analysis can be computer assisted, in the case of some of the more complex alignment devices, or can be manually determined. If it is determined that an adjustment is needed, the analysis includes determining what type of alignment adjustment (i.e., camber, toe position, or both) is needed and how much of an adjustment is needed.

Next, the technician determines the appropriate way to make the adjustment with the shim pieces 300. The adjustment can include inserting additional shim pieces 300, removing shim pieces 300, changing the configuration of shim pieces 300, or any combination of these actions as described above. The adjustment can also include adjusting the length of the upper control arm 190 as described above. Once the spacing between the inboard end 134 and the vehicle body 26 is changed using the shim pieces 300, and any adjustment to the upper control arm 190 has been made, the wheel is re-oriented with respect to the vehicle body 26 to a second or adjusted wheel orientation. If desired, the second wheel orientation can be checked and re-adjusted by repeating the steps outlined above. For example, if the toe position is adjusted, it may be useful to check the camber orientation and make any camber adjustments using the upper control arm 190.

It is important to point out that the toe position of the wheels can be adjusted without substantially changing the camber orientation of the wheels. The vehicle can be manufactured such that the first wheel orientation is achieved using one or more shim pieces 300 that are stacked between the L-shaped mounting bracket 150 and the support 162 on the connection plate 154. Likewise one or more shim pieces 300 can be stacked between the L-shaped mounting bracket 150 and the support 166 on the connection plate 154. Instead of just adding or removing a shim 300 with the necessary thickness to achieve the desired toe adjustment, the technician can add one half of the necessary shim thickness at one end of the connection plate 154 and remove one half of the necessary shim thickness at the other end of the connection plate 154.

For example, if it is desired to adjust the wheels to have a greater toe-out orientation without changing the camber, the technician can remove one or more shim pieces 300 from between the support 162 and the connection plate 154, and can add the same number of shim pieces 300, having the same net thickness, between the support 166 and the connection plate 154. The effect of such an adjustment will be to create a second wheel orientation that has an increased toe-out orientation but the same camber orientation as compared to the first wheel orientation. To yield a greater toe-in orientation without changing the camber, the technician removes one or more shim pieces 300 from between the support 166 and the connection plate 154 and adds the same number of shim pieces 300, having the same net thickness, between the support 162 and the connection plate 154.

As mentioned above, the outboard end 238 of the strut 228 and the outboard end 130 of the lower control arm 126 are both pivotally mounted to the hub assembly 78 at a common pivot point. This is different than prior art suspension systems (e.g., double wishbone or short-long arm design) in which the strut is mounted directly to the lower control arm. Mounting the strut directly to the lower control arm imparts large bending stresses into the lower control arm. In order to tolerate these bending stresses, prior art lower control arms must be designed for added strength and rigidity and are usually heavy and complex stamped or forged parts.

The common pivot point arrangement of the present invention minimizes the bending stresses that are normally created in the lower control arm 126 by the strut 228. Substantially all of the axial force in the strut 228 is transmitted directly into the lower flange 94 of the inner hub member 82. Since the lower control arm 126 is not subjected to most of the axial forces in the strut 228, the lower control arm 126 need not have the strength and rigidity required in prior art suspension systems.

In addition to minimizing the bending forces from the strut, the design of the present invention also minimizes the torsional forces normally imparted on the lower control arm when the brakes are mounted outboard of the control arms, adjacent the wheels. For these reasons, the lower control arm 126 can have a simple, light-weight, and inexpensive design. As mentioned above, the lower control arm 126 is preferably a simple, wishbone-shaped, cast part.

Prior art suspension systems also often utilize an upper control arm that is similar to the complex stamped or forged lower control arm. The upper control arms of prior art suspension systems must also be strong enough to bear the substantial torsional brake reaction forces generated when the brakes are mounted adjacent the wheels. The strut usually passes through the upper control arm, making the design even more complex. Because the suspension system 10 of the present invention is used with smaller, low-speed vehicles, and the brake assemblies 70 and 74 are positioned inboard of the upper and lower control arms 190 and 126, the upper control arm 190 can be a much smaller rod-type linkage as shown. This further reduces the weight, expense, and size of the suspension system 10.

These advantages make the suspension system 10 of the present invention well-suited for use with small, inexpensive, and low-speed vehicles. The suspension system 10 provides excellent ride and handling characteristics, while retaining excellent braking performance, for smaller vehicles by reducing the vehicle's un-sprung mass without sacrificing key suspension components. The space needed for the suspension system 10 is also reduced. The cost of the suspension system 10 is kept low due to the elimination of complex, and expensive to manufacture control arms.

As mentioned above, the suspension system 10 of the present invention could also be used with brake assemblies mounted outboard, adjacent the wheels 18 and 22. If this were the case, however, it may be necessary to increase the strength and/or rigidity of the lower control arm 126, the upper control arm 190, or both. Likewise, the suspension system 10 of the present invention could be adapted for use on larger, heavier, and higher-speed vehicles, but would likely require stronger and more rigid control arms.

Various features of the invention are set forth in the following claims.

## Claims

1. A vehicle suspension system comprising:
a vehicle body;
a hub assembly spaced from the vehicle body and having an inner hub member;
a first control arm having an outboard end pivotally connected to the inner hub member at a first pivot point having a first pivot axis, and an inboard end pivotally connected to the vehicle body; and
a strut including a shock absorbing member and a spring mounted substantially coaxially with the shock absorbing member, the strut having an outboard end pivotally connected to the inner hub member at the first pivot point such that the first control arm and the strut both pivot about the first pivot axis, and an inboard end pivotally connected to the vehicle body.

2. The vehicle suspension system of claim 1, further including a second control arm having an outboard end pivotally connected to the inner hub member at a second pivot point having a second pivot axis, and an inboard end pivotally connected to the vehicle body.

3. The vehicle suspension system of claim 2, wherein the inboard end of the second control arm is connected to the vehicle body at a third pivot point spaced a distance from the second pivot point, and wherein the second control arm is adjustable to change the distance between the second and third pivot points.

4. The vehicle suspension system of claim 2, wherein the second control arm is a rod.

5. The vehicle suspension system of claim 4, wherein the rod includes an adjustment mechanism.

6. The vehicle suspension system of claim 1, wherein the outboard end of the first control arm and the outboard end of the strut are mounted on a single pivot pin.

7. The vehicle suspension system of claim 6, wherein the single pivot pin is isolated from both the first control arm and the strut by an elastomeric bushing.

8. The vehicle suspension system of claim 1, wherein the inboard end of the first control arm is mounted to the vehicle body at second and third pivot points having a common pivot axis.

9. The vehicle suspension system of claim 8, further comprising:
at least one shim positioned between the vehicle body and at least one of the second and third pivot points.

10. The vehicle suspension system of claim 1, further comprising:
an outer hub member rotatably supported by the inner hub member; and
a drive shaft operably connected between a transmission supported by the vehicle body and the hub assembly, the drive shaft providing rotational movement to the outer hub member.

11. The vehicle suspension system of claim 10, wherein the drive shaft is an adjustable length, articulating drive shaft.

12. The vehicle suspension system of claim 1, wherein the first control arm is wishbone-shaped.

13. The vehicle suspension system of claim 1, wherein the first control arm is a cast part.

14. A vehicle suspension system comprising:
a control arm having an outboard end pivotally connected to a hub assembly, and an inboard end pivotally connected to a vehicle body; and
a shim positioned between the inboard end and the vehicle body to achieve a desired offset between the hub assembly and the vehicle body.

15. The vehicle suspension system of claim 14, wherein the hub assembly supports a wheel having a wheel camber, and wherein the shim is configured to achieve the desired offset and thereby achieve a desired wheel camber orientation with respect to the vehicle body.

16. The vehicle suspension system of claim 14, wherein the hub assembly supports a wheel having a toe, and wherein the shim is configured to achieve the desired offset and thereby achieve a desired toe orientation with respect to the vehicle body.

17. The vehicle suspension system of claim 14, wherein the shim has a thickness between approximately 0.5 mm and 3 mm.

18. The vehicle suspension system of claim 14, wherein the shim includes a plurality of individual shim pieces.

19. The vehicle suspension system of claim 14, wherein the inboard end is connected to the vehicle body via a connection plate having thereon first and second supports.

20. The vehicle suspension system of claim 19, wherein the shim is positioned between the connection plate and the vehicle body.

21. The vehicle suspension system of claim 20, further comprising:
a second shim positioned between the connection plate and the vehicle body.

22. The vehicle suspension system of claim 21, wherein the first and second shims have respective first and second thicknesses, the first thickness being different than the second thickness.

23. The vehicle suspension system of claim 21, wherein the first and second shims are in stacked relation.

24. The vehicle suspension system of claim 19, wherein the shim is positioned between the vehicle body and both the first and second supports.

25. The vehicle suspension system of claim 19, wherein the shim is positioned between the vehicle body and only one of the first and second supports.

26. A method of adjusting a wheel of a vehicle with respect to a vehicle body, the wheel being connected to the vehicle body by a control arm having an inboard end interconnected with the vehicle body, the method comprising:
determining a first wheel orientation with respect to the vehicle body;
analyzing the first wheel orientation to determine whether the wheel is properly oriented with respect to the vehicle body; and
changing a spacing between the inboard end of the control arm and the vehicle body using a shim when the wheel is not properly oriented with respect to the vehicle body, such that the first wheel orientation is adjusted to a second wheel orientation with respect to the vehicle body.

27. The method of claim 26, wherein changing the spacing using a shim includes inserting the shim between the inboard end and the vehicle body.

28. The method of claim 26, wherein changing the spacing using a shim includes removing the shim from between the inboard end and the vehicle body.

29. The method of claim 26, wherein changing the spacing using a shim includes changing a configuration of the shim between the inboard end and the vehicle body.

30. The method of claim 26, wherein the first wheel orientation includes a first camber orientation and wherein changing the spacing using a shim results in a second wheel orientation having a second camber orientation.

31. The method of claim 26, wherein the first wheel orientation includes a first toe orientation and wherein changing the spacing using a shim results in a second wheel orientation having a second toe orientation.

32. The method of claim 26, wherein the wheel is also connected to the vehicle body by a second control arm having an adjustment mechanism for changing the length of the second control arm, the method further comprising:
adjusting the adjustment mechanism to change the length of the second control arm, thereby further adjusting the first wheel orientation to the second wheel orientation.

33. The method of claim 26, wherein the inboard end is interconnected with the vehicle body via a connection plate having thereon first and second supports and wherein changing the spacing using a shim includes adding a shim between the first support and the vehicle body and removing a shim between the second support and the vehicle body.

34. The method of claim 33, wherein the first wheel orientation includes a camber orientation and a first toe orientation, and wherein changing the spacing using a shim results in a second wheel orientation having the camber orientation and a second toe orientation.
